# EUROPEAN PATENT APPLICATION

(11) **EP 1 860 643 A1**
(43) Date of publication of application: **28.11.2007**
(21) Application number: 06729596.4
(22) Date of filing: 15.03.2006
(51) Int. Cl.: G10K 15/02

(54) **DIGITAL MEDIUM DEVICE, PROGRAM, AND DIGITAL MEDIUM PROVIDING METHOD**

(30) Priority: 16.03.2005 JP 2005075427
(71) Applicant: Kabushiki Kaisha Kenwood, Hachiouji-shi, Tokyo 192-8525 (JP)
(72) Inventor: NAGOSHI, Kei, Tokyo, 1330057 (JP); IWAMA, Shigehiko, hara-shi, Kanagawa, 2290003 (JP); FURUYA, Hideo, Tokyo, 1920913 (JP); GOTO, Souju, okohama-shi, Kanagawa, 2260014 (JP); YASHIRO, Yoshikazu, ji-shi, Tokyo, 1920916 (JP)
(74) Representative: Leinweber & Zimmermann
(86) International application number: PCT/JP2006/305629
(87) International publication number: WO 2006/098486

(57) **Abstract**

Even when digital media of the respective devices are not media of common codec, the digital media can be reproduced in other device. A digital medium is provided to a providing destination device which reproduces the digital medium upon receiving it. Before providing the digital medium, a codec which can be used in the providing destination device is reported to the providing source device (step 22). The provision of the digital medium is directly performed without performing conversion if the codec is a predetermined common codec. If the codec is not the common codec, it is converted into a medium format of the common codec. Alternatively, if the codec can be used by the providing destination device, the codec is directly used in the medium format (steps 23-26).

## Description

### Technical Field

The present invention relates to a digital medium device that can provide a digital medium from one device to the other in one direction or two directions, a program for causing a computer to function as the digital medium device, and a digital medium providing method.

### Background Art

Conventionally, one or more digital media players as the clients are connected to a head unit to construct a network to mutually provide the contents recorded in the head unit or each player from one device to the other, and present the provided contents in the head unit or each player (e.g., refer to Japanese Patent Application Laid-Open No. 2001-296875). The contents can be downloaded or provided by streaming.

In such system, the head unit has also a function of digital media player. The head unit is, for example, a head unit for car audio, or a media server for home network. Also, a codec for the digital medium of the contents that can be mutually supplied from one device to another and presented in the head unit or each player is preset inherently to the system.

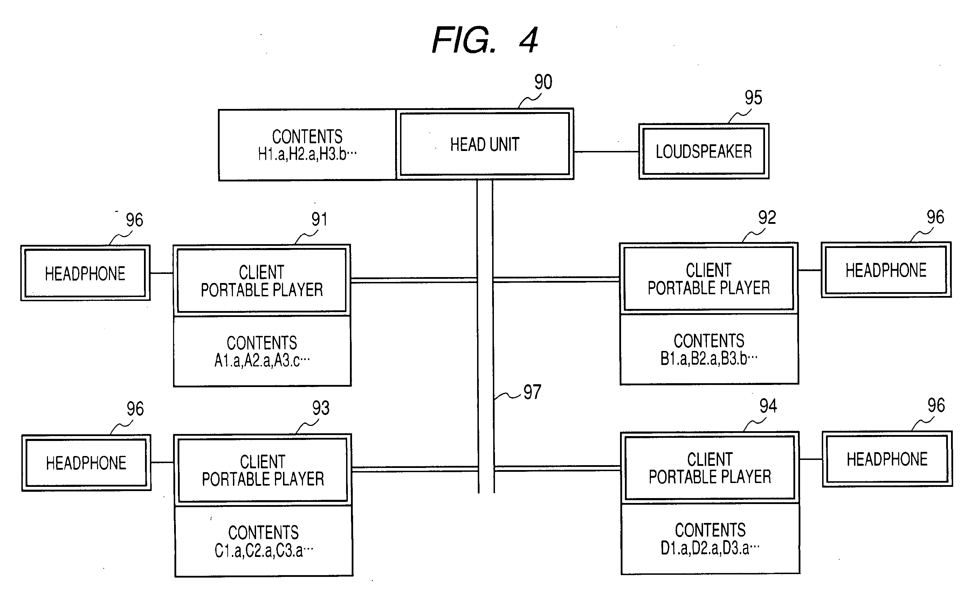

FIG. 4 is a block diagram illustrating a network audio system. In FIG. 4, reference numeral 90 designates a head unit, reference numerals 91 to 94 designate a portable player as the client, and reference numeral 97 designates a bus connecting the head unit 90 and the clients 91 to 94 to construct a network. The head unit 90 is connected to a loudspeaker 95 for outputting the reproduced sound. The clients 91 to 94 are connected to a headphone 96 for outputting the reproduced sound.

Each of the head unit 90 and the clients 91 to 94 has a audio file as the digital medium encoded by the codec corresponding to an extension such as ".a", ".b" or ".c". In this system, the audio file that can be downloaded or reproduced by streaming is limited to the file name having an extension ".a", for example. That is, the codec corresponding to the extension ".a" is prescribed as common to the system.

### Disclosure of the Invention

However, with the above prior art, in the case where the audio file of the contents stored in the head unit 90 or each player 91 to 94 is recorded with various kinds of codec that are different for each player or unit, as in the system of FIG. 4, the head unit or each player can not discriminate the codec of the audio file that the other player or head unit has. Therefore, only when the audio file is recorded in a common codec prescribed in the system, the head unit or each player can reproduce the digital medium upon receiving it.

In the system of FIG. 4, it is only the audio file having the file name with extension ".a" that can reproduce the digital medium commonly as the entire system. The audio file "H3.b" of the head unit 90, the audio file "A3.c" of the client 91 and the audio file "B3.b" of the client 92 can not be received and reproduced by the other client or head unit.

This invention has been achieved in the light of the above-mentioned problems associated with the prior art, and it is an objective of the present invention to reproduce a digital medium owned by each device within a system in the other device within the system even if the digital medium is not encoded in a common codec of the system.

### Means for solving the problems

A first aspect of the present invention to accomplish the above objective is a digital medium device for providing a digital medium to a providing destination device which reproduces the digital medium upon receiving it. This device has means for acquiring the information regarding a codec which can be used in the providing destination device before providing the digital medium.

Herein, the providing destination device and the digital medium device are, for example, a head unit for car audio, a digital media player, or a media server for home network. The providing destination device and the digital medium device are connected to a predetermined network using the Ethernet (registered trademark) or a wireless LAN, and can be inter-communicated. The digital medium means a file recording the data of video, moving picture or music. The codec may be, for example, a compression codec such as MP3 or a decompression codec such as WAV. The digital medium can be downloaded or provided by streaming. The phrase "before providing the digital medium" means the time of connecting the providing destination device and the digital medium device to the network, or the time immediately before receiving a predetermined request designating the contents from the providing destination device and providing the digital medium corresponding to the contents in response to this request.

In this configuration, the digital medium device can acquire the information regarding the codec which can be used by the providing destination device before providing the digital medium to the providing destination device. Accordingly, the digital medium device can provide the digital medium by comparing the codec of the digital medium to be provided and the codec that can be used by the providing destination device in providing the digital medium, and converting the digital medium into a medium format of the codec that can be used by the providing destination device, as needed. Accordingly, though only the digital medium in a predetermined common codec can be conventionally mutually provided between plural devices, the digital medium in more kinds of codec can be mutually provided between devices according to the invention, because each device plays a role as the digital medium device or the providing destination device of the invention.

A second aspect of the present invention is a digital medium device for reproducing a digital medium upon receiving it from a providing source device which provides the digital medium. This device has means for notifying the providing source device of the information regarding a codec which can be used by itself before receiving the digital medium. This digital medium device has a function of the providing destination device in the first invention.

A third aspect of the present invention is a digital medium device for providing a digital medium to a providing destination device which reproduces the digital medium upon receiving it. This device has means for performing the provision of the digital medium directly if the codec is a predetermined common codec, or after converting it into a medium format of the common codec if the codec is not the common codec. The common codec may be, for example, a compression codec such as MP3 or a decompression codec such as WAV.

According to the third aspect, the digital medium device can provide the digital medium to the providing destination device by converting the digital medium into the format of the common codec, even if the digital medium cannot use the common codec. Accordingly, though only the digital medium in the common codec can be conventionally mutually provided between plural devices, the digital medium in more kinds of codec can be mutually provided between devices, because each device properly plays a role as the digital medium device or the providing destination device.

The digital medium device according to the third aspect of the present invention may further have means for transferring the digital medium to a predetermined device and requesting the predetermined device to convert the digital medium into the medium format of the common codec and provide it to the providing destination device, instead of performing the provision of the digital medium after converting it into the format of the common codec. The predetermined device is, for example, a head unit or a media server. With this digital medium device, the format of the digital medium is converted in the predetermined device, whereby the load of the digital medium device can be relieved.

A digital medium device according to a fourth aspect of the present invention has means for converting a digital medium transferred together with a predetermined request into a medium format of a predetermined common codec, and providing it to a providing destination device designated in the request. The digital medium device is, for example, a head unit or a media server. With this digital medium device, the format of the digital medium is converted for the providing source device that provides the digital medium, whereby the load of the providing source device can be relieved.

A fifth aspect of the present invention is a digital medium device for providing a digital medium to a providing destination device which reproduces the digital medium upon receiving it. This device has means for performing the provision of the digital medium directly in the medium format, when a codec of the digital medium can be used by the providing destination device, even if the codec is different from a predetermined common codec.

In the digital medium device according to the fifth aspect of the present invention, a judgement whether or not the codec of the digital medium to be provided can be used by the providing destination device can be made based on the information regarding the codec owned by the providing destination device, for example. And the digital medium device is directly provided to the providing destination device, when the codec of the digital medium can be used by the providing destination device even if the codec of the digital medium to be provided is not the common codec. Accordingly, though only the digital medium in the common codec can be conventionally mutually provided between plural devices, the digital medium in more kinds of codec can be mutually provided between devices, because each device plays a role as the digital medium device or the providing destination device of the invention.

A sixth aspect of the present invention is' a digital medium device for selecting a digital medium used in presenting the contents in accordance with a predetermined request designating the contents. This device has means for selecting the digital medium having a predetermined common codec from among the digital media of the contents owned by each device capable of providing the digital medium, if any, or giving priority to and selecting the digital medium having a lower degree of compression or a higher reproduction performance, if the digital medium does not have the predetermined common codec.

Herein, for the contents designated in the predetermined request, plural digit media with mutually different codecs may be owned by each device capable of providing the digital medium. In the invention, the digital medium used in presenting the designated contents having the common codec is selected if the digital medium having the common codec exists, or the digital medium having a lower degree of compression or a high reproduction performance is selected if the digital medium having the common codec does not exist. The information required in the selection can be properly acquired from each device via communication means.

The predetermined request is given to the digital medium device as an operation input to the digital medium device. In this case, the digital medium device can receive the provision of the digital medium from the device owing it and reproduce the selected digital medium to present the designated contents. Also, the predetermined request can be given from the other device to the digital medium device. In this case, the digital medium device can notify the other device of the selection result. The other device can receive the selected digital medium from the device owing it, based on the selection result, and reproduce the digital medium to present the designated contents.

Also, if the predetermined request is given from the other device to the digital medium device, the digital medium device may request the device owning it to provide the selected digital medium to the other device. In this case, the other device can receive the provision of the selected digital medium from the device owing it, and reproduce the digital medium to present the designated contents. In providing the digital medium, the format of the medium is converted, as needed, so that the device receiving the provision of the digital medium may reproduce the digital medium. Accordingly, with the invention, the contents can be presented using the digital medium having a higher reproduction performance among the digital media owned by each device.

A seventh aspect of the present invention is a digital medium device for selecting a digital medium used in presenting the contents in accordance with a predetermined request designating the contents. This device has means for selecting the digital medium having a lower degree of compression or a higher reproduction performance from among the digital media of the contents owned by each device capable of providing the digital medium, without considering the codec. The selection of the digital medium is made in the same operation as the seventh invention, except not considering the codec. Accordingly, with the invention, the contents can be presented using the digital medium having a higher reproduction performance among the digital media owned by each device.

A program according to the invention causes a computer to function as each means in the digital medium device according to the invention.

An eighth aspect of the present invention is a digital medium providing method for providing a digital medium from a providing source device to a providing destination device which reproduces the digital medium upon receiving it. This, method has a step of the providing destination device sending the information regarding a codec which can be used in the providing destination device to the providing source device before receiving the digital medium, and a step of the providing source device receiving the information regarding the codec sent by the providing destination device before providing the digital medium. This digital medium providing method may be implemented using the digital medium device according to the first and second inventions.

A ninth aspect of the present invention is a digital medium providing method for providing a digital medium from a providing source device to a providing destination device which reproduces the digital medium upon receiving it. With this method, the provision of the digital medium is directly performed without performing conversion if the codec is a predetermined common codec, or performed after converting it into a medium format of the common codec if the codec is not the common codec. This digital medium providing method may be implemented by the digital medium device according to the third invention or the digital medium device according to the fourth and fifth inventions.

A tenth aspect of the present invention is a digital medium providing method for providing a digital medium from a providing source device to a providing destination device which reproduces the digital medium upon receiving it. With this method, the provision of the digital medium is directly performed without converting the digital medium, when a codec can be used by the providing destination device, even if the codec is different from a predetermined common codec. This digital medium providing method may be implemented by the digital medium device according to the sixth invention, for example.

An eleventh aspect of the present invention is a digital medium providing method for providing a digital medium used in presenting the contents to a providing destination device in accordance with a predetermined request designating the contents from the providing destination device that presents the contents by reproducing the digital medium upon receiving it. This method has a step of selecting the digital medium having a predetermined common codec from among the digital media of the contents owned by a device capable of providing the digital medium to the providing destination device, as the digital medium for the designated contents, if any, or giving priority to and selecting the digital medium having a lower degree of compression or a higher reproduction performance, if the digital medium in the medium format of the common codec does not exist, and a step of providing the selected digital medium from the providing source device owning it to the providing destination device, using the digital medium providing method according to the eleventh or twelfth invention. The selection of the digital medium may be implemented using the digital medium device according to the seventh invention, for example.

A twelfth aspect of the present invention is a digital medium providing method for providing a digital medium for use in reproducing the contents to a providing destination device in accordance with a predetermined request designating the contents from the providing destination device that presents the contents by reproducing the digital medium upon receiving it. This method has a step of giving priority to and selecting the digital medium having a lower degree of compression or a higher reproduction performance from among the digital media of the contents owned by a device capable of providing the digital medium to the providing destination device, as the digital medium for the designated contents, without regard to the codec, and a step of providing the selected digital medium from the providing source device owning it to the providing destination device, using the digital medium providing method according to the eleventh or twelfth invention. The selection of the digital medium may be implemented using the digital medium device according to the eighth invention, for example.

### Advantages of the invention

With the invention, the digital medium of the codex other than the preset common codec can be provided between devices in one direction or two directions. Also, the digital medium having a higher reproduction performance among the digit media owned by each device can be given priority to be provided. Also, even when the codec of the digital medium is other than the common codec, the digital medium can be directly provided without converting the format if the providing destination device can reproduce the digital medium.

### Brief Description of the Drawings

FIG. 1 is a block diagram showing a network audio system according to one embodiment of the present invention;
FIG. 2 is a flowchart showing a contents presentation process in the system of FIG. 1;
FIG. 3 is a flowchart showing another example of the contents presentation process in the system of FIG. 1; and
FIG. 4 is a block diagram showing the network audio system according to the prior art.

### Best Mode for Carrying Out the Invention

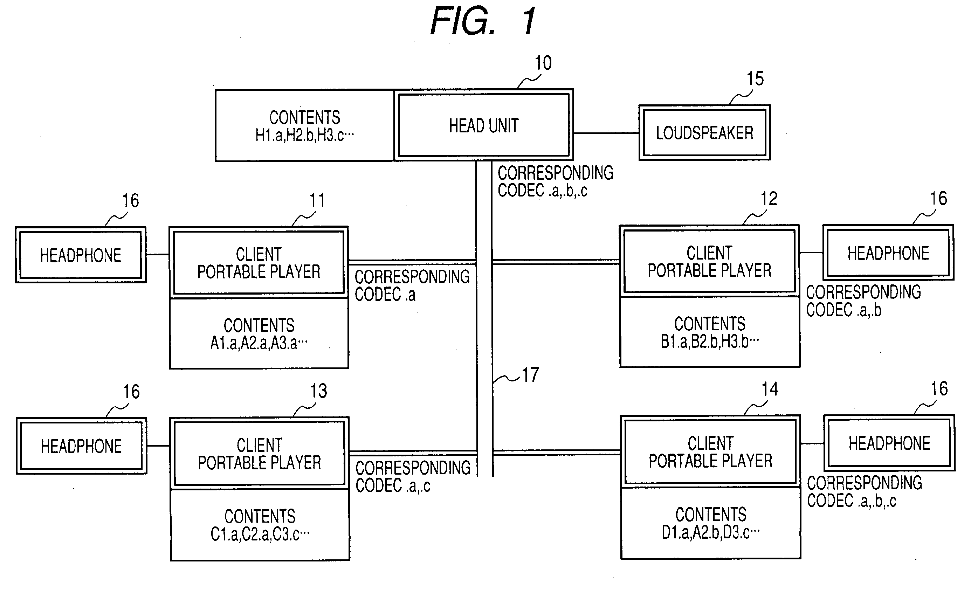

FIG. 1 is a block diagram showing a network audio system according to one embodiment of the present invention. In FIG. 1, reference numeral 10 designates a head unit, and reference numerals 11 to 14 designate a portable player as the client. The head unit 10 and the clients 11 to 14 construct a network via a bus 17. Reference numeral 15 designates a loudspeaker for outputting the reproduced sound in the head unit 10. Reference numeral 16 designates a headphone for outputting the reproduced sound in the clients 11 to 14.

As shown in FIG. 1, the head unit 10 owns a audio file having plural contents with extensions ".a", ".b" and ".c", and has three available codecs corresponding to these extensions ".a", ".b" and ".c". Similarly, the client 11 owns the audio file with extension of ".a" and the codec, the client 12 owns the audio file with extensions of ".a" and ".b" and the codec, the client 13 owns the audio file with extensions of ".a" and ".c" and the client, and the client 14 owns the audio file with extensions of ".a", ".b" and ".c" and the codec.

Each device of the head unit 10 and the clients 11 to 14 has a function of mutually providing the audio file as the digital medium to be reproduced to present the contents designated by the user, and means for mutually notifying and acquiring the information regarding the codec that can be used to reproduce the audio file before providing the digital medium. The provision of the audio file is directly performed if the codec is a predetermined common codec, or after it is converted into a medium format of the common codec if the codec is not the common codec. Even if the codec of the audio file is different from the common codec, the provision of the audio file is performed directly in the medium format, when the codec of the audio file can be used in the providing destination device. The common codec may be a compression codec such as MP3 or a decompression codec such as WAV.

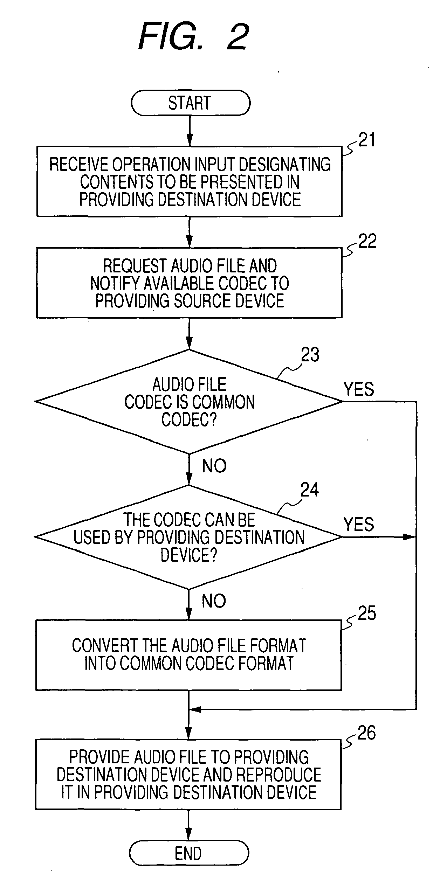

FIG. 2 is a flowchart showing a presentation process of the contents in the system of FIG. 1. In this process, any device of the head unit 10 and the clients 11 to 14 (hereinafter referred to as a "providing destination device") receives a audio file provided from the other device (hereinafter referred to as a "providing source device") and reproduces the audio file to present the contents.

That is, if the presentation process is started, the providing destination device firstly displays a predetermined menu to receive a user's operation input for designating the contents to be presented at step 21. That is, the titles of musical compositions corresponding to the audio file owned by each device other than the providing destination device are displayed in list form on the menu, whereby the user selects a desired title of musical composition from the list to designate the contents. The data for displaying the menu can be properly acquired via the network from each device when constructing the network, or as needed.

The providing destination device makes a request for providing the audio file to the providing source device owning the audio file of the designated contents at step 22. Also, the providing destination device notifies the providing source device of the information regarding the codec that can be used by itself simultaneously with this request. This information regarding the codec may be mutually notified between devices, when connected to the network. Upon receiving this request and notification, the providing source device determines whether the codec of the audio file is the common codec at step 23. If it is determined that the codec is the common codec, the audio file is directly provided to the providing destination device at step 26.

On the other hand, if it is determined that the codec of the audio file is not the common codec at step 23, the providing source device determines whether or not the codec of the audio file is owned and available by the providing destination device at step 24. If it is determined that the codec is available, the providing source device directly provides the audio file to the providing destination device at step 26. If it is determined that the codec is not available, the audio file is converted into the format of the common codec at step 25, and provided to the providing destination device at step 26.

At step 26, the audio file is provided from the providing source device to the providing destination device. The provision of the audio file is made in the downloading or streaming form from the providing source device to the providing destination device. The providing destination device decodes the audio file using a corresponding codec to present the contents. The presentation of the contents is performed by outputting the reproduced sound via the loudspeaker 15 or headphone 16. If the reproduction of this audio file is completed, the process of FIG. 2 is ended.

With the embodiment, if the codec of the audio file to be provided is the common codec and if the codec of the audio file is not the common codec but can be used by the providing destination device, the audio file is directly provided. In other cases, the audio file is converted into the format of the common codec and provided. Therefore, the audio file in any format can be provided as reproducible from the providing source device to the providing destination device. Also, if the codec of the audio file can be used by the providing destination device, the audio file can be provided without converting the audio file into the format of the common codec.

For example, in the configuration of FIG. 1, the audio file in the common format that is encoded by the common codec is the audio file having the file name with extension of ".a", the audio files having the file names "H1.a", "A1.a", "A2.a", "A3.a", "B1.a", "C1.a", "C2.a" and "Dl.a" are directly provided in the format without conversion. However, the other audio files "H2.b", "H3.c", "B2.b", "H3.b", "C3.c", "A2.b" and "D3.c" are converted into the audio file in the normal format and provided by the providing source device. Accordingly, all the audio files can be mutually provided between the devices.

Though in the above description, the conversion of the file format at step 25 is performed in the providing source device, the conversion of the file format may be alternatively performed in the head unit 10. In this case, each of the clients 11 to 14 has means for transferring the audio file to be provided to the providing destination device to the head unit 10 and requesting the head unit 10 to convert the audio file into the medium format of the common codec and provide it to the providing destination device. Also, the head unit 10 has means for converting the audio file transferred together with the request into the medium format of the common codec, and providing it to the providing destination device designated in the request. Thereby, the head unit 10 can collectively manage necessary information to perform the conversion process, whereby the load in each of the clients 11 to 14 can be relieved.

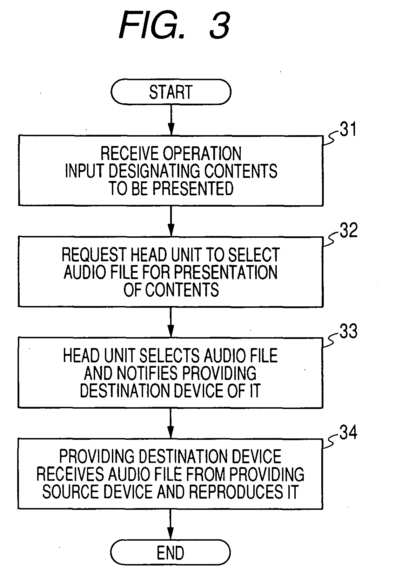

FIG. 3 is a flowchart showing another example of the contents presentation process in the system of FIG. 1. For this process, the head unit 10 has selection means for selecting the audio file used in presenting the contents in accordance with a predetermined request designating the contents from the providing destination device that is any of the clients 11 to 14. The head unit 10 selects the audio file of the preset common codec from among the audio files of the contents owned by each device other than the providing destination device, if any, or gives priority to and selects the audio file having a lower degree of compression or a higher reproduction performance if the audio file of the common codec does not exist.

If the contents presentation process is started, the providing destination device firstly receives a user's operation input for designating the contents to be presented at step 31. This process is performed in the same manner as at step 21 of FIG. 2. Then at step 32, the providing destination device requests the head unit 10 to select the audio file used in presenting the designated contents.

Upon receiving this request, the head unit 10 selects the audio file used in presenting the contents designated in the request and notifies the providing destination device of the selection result at step 33. The information regarding the audio file owned by each device, which is required to select the audio file, is acquired beforehand from each device. In the selection, the head unit 10 selects the audio file of the preset common codec from among the audio files of the contents owned by each device other than the providing destination device, if any, or gives priority to and selects the audio file having a lower degree of compression or a higher reproduction performance if the audio file of the common codec does not exist.

At step 34, the providing destination device makes a request for providing the selected audio file to the providing source device owning the selected audio file, based on the notified selected result. In response to this request, the providing source device provides the audio file to the providing destination device. The request for the audio file and the provision of the audio file at step 34 are performed in the same manner as at steps 22 to 26 in FIG. 2. That is, the audio file is provided by converting the file format of the audio file into the format of the common codec, when needed.

With this presentation process, if the audio file of the common format does not exist as the audio file that can be used in presenting the designated contents, the contents can be presented based on the audio file having the most excellent reproduction performance among the audio files owned by each device. For example, in the case where the owned state of the audio file in each device is as shown in FIG. 1, when there is an operation input designating the contents "H3." in the providing destination device, the audio file having a higher reproduction performance and a lower degree of compression is selected from the audio file "H3.c" owned by the head unit 10 owns and "H3.b" owned by the client 12. The providing destination device receives the audio file, which is converted from the audio file "H3.c" or "H3.b" into the common format of ".a", from the head unit 10 or the client 12 having the selected audio file, and reproduces it to present the contents. Also, if there is an operation input designating the contents "A2." in the providing destination device, the audio file "A2.a" of the common codec is selected from the audio file "A2.a" owned by the client 11 and the audio file "A2.b" owned by the client 14.

Though the head unit 10 selects the audio file in the process of FIG. 3, the providing destination device may instead select the audio file. Also, in selecting the audio file at step 33, the digital medium having a lower degree of compression or a higher reproduction performance is given priority to be selected if the audio file in the medium format of the common codec does not exist, but instead, the digital medium having a lower degree of compression or a higher reproduction performance may be given priority to be selected without regard to the codec. In this case, for example, when there is an operation input designating the contents "A2." in the providing destination device, the audio file "A2.b" is selected and provided from the audio file "A2.a" owned by the client 11 and the audio file "A2.b" owned by the client 14, if the audio file "A2.b" has a higher reproduction performance than the audio file "A2.a". However, if the providing destination device does not have the codec corresponding to ".b", and can not reproduce the audio file "A2.b", the audio file "A2.a" of the common codec for the client 11 is selected and provided. Or if the providing destination device does not have the codec corresponding to ".b", but the audio file having a higher bit rate than the "A2.a" owned by the client 11 can be obtained by converting the audio file "A2.b" of the client 14 into the file format of ".a", the "A2.b" of the client 14 may be selected and provided by converting it into the audio file of ".a" having the higher bit rate.

The invention is not limited to the above embodiments, but various modifications may be properly made thereto. For example, the presentation of one contents owned by the head unit or the client, though not described above, may be performed by the head unit and the client at the same time. That is, the head unit or the client owning the audio file of the contents may provide the audio file to plural other clients or the head unit in simultaneous and parallel manner. Also, only the head unit may present the contents, and the other clients may provide the audio file to the head unit. Also, plural clients may present different contents in simultaneous and parallel manner.

Also, though the wire network is used in the above description, a wireless network such as a wireless LAN, the Internet, or the P2P (peer-to-peer) connection where the head unit or server does not exist may be used instead.

## Claims

1. A digital medium device for providing a digital medium to a providing destination device which reproduces the digital medium upon receiving it, having means for acquiring the information regarding a codec which can be used in said providing destination device before providing said digital medium.

2. A digital medium device for reproducing a digital medium upon receiving it from a providing source device which provides the digital medium, having means for notifying said providing source device of the information regarding a codec which can be used by itself before receiving said digital medium.

3. A digital medium device for providing a digital medium to a providing destination device which reproduces the digital medium upon receiving it, having means for performing the provision of the digital medium directly if the codec is a predetermined common codec, or after converting it into a medium format of said common codec if the codec is not the common codec.

4. The digital medium device according to claim 3, further having means for transferring said digital medium to a predetermined device and requesting the predetermined device to convert the digital medium into the medium format of said common codec and provide it to said providing destination device, instead of performing the provision of said digital medium after converting it into the medium format of said common codec.

5. A digital medium device having means for converting a digital medium transferred together with a predetermined request into a medium format of a predetermined common codec, and providing it to a providing destination device designated in said request.

6. A digital medium device for providing a digital medium to a providing destination device which reproduces the digital medium upon receiving it, having means for performing the provision of said digital medium directly in the medium format, when a codec of said digital medium can be used by said providing destination device, even if the codec is different from a predetermined common codec.

7. A digital medium device for selecting a digital medium used in presenting the contents in accordance with a predetermined request designating said contents, having means for selecting the digital medium having a predetermined common codec from among the digital media of said contents owned by each device capable of providing the digital medium, if any, or giving priority to and selecting the digital medium having a lower degree of compression or a higher reproduction performance, if the digital medium does not have the predetermined common codec.

8. A digital medium device for selecting a digital medium used in presenting the contents in accordance with a predetermined request designating said contents, having means for selecting the digital medium having a lower degree of compression or a higher reproduction performance from among the digital media of said contents owned by each device capable of providing the digital medium, without considering the codec.

9. A program for causing a computer to function as each means in the digital medium device according to any one of claims 1 to 8.

10. A digital medium providing method for providing a digital, medium from a providing source device to a providing destination device which reproduces the digital medium upon receiving it, said method comprising the steps of:
sending by said providing destination device the information regarding a codec which can be used in said providing destination device to said providing source device before receiving said digital medium; and
receiving by said providing source device the information regarding said codec sent by said providing destination device before providing said digital medium.

11. A digital medium providing method for providing a digital medium from a providing source device to a providing destination device which reproduces the digital medium upon receiving it, wherein the provision of the digital medium is directly performed without performing conversion if the codec is a predetermined common codec, or performed after converting it into a medium format of said common codec if the codec is not the common codec.

12. A digital medium providing method for providing a digital medium from a providing source device to a. providing destination device which reproduces the digital medium upon receiving it, wherein the provision of said digital medium is directly performed without converting said digital medium, when a codec can be used by said providing destination device, even if the codec is different from a predetermined common codec.

13. A digital medium providing method for providing a digital medium used in presenting the contents to a providing destination device in accordance with a predetermined request designating said contents from the providing destination device that presents the contents by reproducing the digital medium upon receiving it, said method comprising the steps of:
selecting the digital medium having a predetermined common codec from among the digital media of said contents owned by a device capable of providing the digital medium to the providing destination device, as the digital medium for the designated contents, if any, or giving priority to and selecting the digital medium having a lower degree of compression or a higher reproduction performance, if the digital medium with said common codec does not exist; and
providing the selected digital medium from the providing source device owning it to the providing destination device, using the digital medium providing method according to claim 11 or 12.

14. A digital medium providing method for providing a digital medium for use in reproducing the contents to a providing destination device in accordance with a predetermined request designating said contents from the providing destination device that presents the contents by reproducing the digital medium upon receiving it, said method comprising the steps of:
giving priority to and selecting the digital medium having a lower degree of compression or a higher reproduction performance from among the digital media of said contents owned by a device capable of providing the digital medium to the providing destination device, as the digital medium for the designated contents, without regard to the codec; and
providing the selected digital medium from the providing source device owning it to the providing destination device, using the digital medium providing method according to claim 11 or 12.
